# EUROPÄISCHE PATENTSCHRIFT

(11) **EP 4 520 613 B1**
(45) Veröffentlichungstag und Bekanntmachung des Hinweises auf die Patenterteilung: **04.11.2026**
(21) Anmeldenummer: 24197437.7
(22) Anmeldetag: 30.08.2024
(51) Int. Cl.: B61D 15/00, B60M 1/28, B61D 15/08, B61D 17/12

(54) **ARBEITSWAGEN**
WORK VEHICLE
ENGIN DE TRAVAUX

(30) Priorität: 05.09.2023 AT 507062023
(43) Veröffentlichungstag der Anmeldung: 12.03.2025
(73) Patentinhaber: Plasser & Theurer Export von Bahnbaumaschinen Gesellschaft m.b.H., 1010 Wien (AT)
(72) Erfinder: Kaiser, Christoph, 4170 Haslach a. d. Mühl (AT); Ebner, Mario, 4222 Langenstein (AT)

(56) Entgegenhaltungen:
- WO-A1-2011/069594
- DE-A1- 102013 200 628
- DE-C2- 4 206 632

## Beschreibung

Die Erfindung betrifft einen Arbeitswagen mit einem auf Schienenfahrwerken abgestützten Wagenrahmen, auf dem ein Wagenaufbau mit einem Wagendach angeordnet ist, und mit einem verschwenkbaren Tragarm, der in einer Ruhestellung mittels einer Fixiervorrichtung mit dem Wagendach verbunden ist, wobei die Fixiervorrichtung eine am Wagendach angeordnete Aufnahmeeinheit umfasst. Zudem betrifft die Erfindung ein Verfahren zum Betreiben des Arbeitswagens.

Ein gattungsgemäßer Arbeitswagen ist aus der Veröffentlichungsschrift WO 2011/069594 A1 bekannt. Eine Fixiervorrichtung zur Verriegelung eines Tragarms umfasst eine Aufnahmeeinheit, die als integrale Komponente des Wagendachs ausgebildet ist. An der Aufnahmeeinheit oder an dem Tragarm sind Klemmbacken angeordnet, die mittels Antriebe aus einer Entriegelungsposition in eine Verriegelungsposition bewegbar sind. Im verriegelten Zustand ist der Tragarm formschlüssig am Wagendach fixiert. In Verriegelungsposition verhindern die Klemmbacken jegliche Relativbewegungen zwischen Tragarm und Wagendach, wodurch Tragarm und Wagendach eine starre Einheit bilden.

Der Erfindung liegt die Aufgabe zugrunde, für einen Arbeitswagen der eingangs genannten Art die Nutzbarkeit und Lebensdauer zu verbessern. Weiter ist es eine Aufgabe der Erfindung, ein entsprechendes Verfahren anzugeben. Erfindungsgemäß werden diese Aufgaben gelöst durch die Merkmale des unabhängigen Anspruchs 1.

Abhängige Ansprüche geben vorteilhafte Ausgestaltungen der Erfindung an.

Dabei sind zwischen der Aufnahmeeinheit und dem Wagendach schwingungsdämpfende Entkopplungselemente angeordnete, sodass der Tragarm in fixierter Position schwingungsentkoppelt mit dem Wagendach verbunden ist. Auf diese Weise ist das Wagendach als Element eines gegenüber dem Wagenrahmen schwingungsentkoppelten Wagenaufbaus ausführbar. Der Tragarm ist als Element eines Krans oder einer Hebebühne zwangsläufig direkt mit dem Wagenrahmen verbunden, damit Tragekräfte über den Wagenrahmen aufgenommen werden können. Während einer Fahrt des Arbeitswagens entstehen Schwingungen, die vom Wagenrahmen auf den Tragarm übergehen. Diese Schwingungen würden bei einer Fixierung des Tragarms mittels einer Fixiervorrichtung nach dem Stand der Technik auf das Wagendach übertragen werden und somit den Wagenaufbau belasten.

Mit der erfindungsgemäßen Schwingungsentkopplung bleiben auftretende Vibrationen auf den Wagenrahmen und die direkt mit dem Wagenrahmen verbundenen Komponenten beschränkt. Innerhalb des Wagenaufbaus angeordnete Einrichtungen sind auch bei fixiertem Tragarm keiner Vibrationsbelastung ausgesetzt, wodurch aufgrund eines geringeren Verschleißes deren Lebensdauer gesteigert wird. Insbesondere werden als Körperschall auftretende Schwingungen vom schwingungsentkoppelten Wagenaufbau ferngehalten. Die Entkopplungselemente wirken dabei vornehmlich als körperschalldämpfende Elemente. Damit verbessert sich die Ergonomie innerhalb des Wagenaufbaus, wodurch die Nutzbarkeit des Arbeitswagens verbessert wird.

Vorteilhafterweise sind die Entkopplungselemente als Formteile aus einem mikrozellulären Polyurethanwerkstoff gefertigt. Ein solcher Werkstoff wird beispielsweise von der Firma Getzner unter dem Markennamen Sylomer (siehe www.getzner.com/de/produkte/sylomer) angeboten. Andere Bezeichnungen für diesen Werkstoff sind mikrozellulärer oder mikrozelliger Polyurethanschaumstoff, PUR-Schaum oder nur PU-Schaum. Der Werkstoff ist einfach zu verarbeiten und weist bei hoher Belastbarkeit sehr gute Dämpfungseigenschaften auf.

Bei einer vorteilhaften Ausprägung des Arbeitswagens sind die Entkopplungselemente zwischen einer am Wagendach angeordneten Auflage sowie Befestigungselementen einerseits und der Aufnahmeeinheit andererseits angeordnet. Das ermöglicht eine platzsparende Anordnung der Entkopplungselemente, ohne die dämpfende Wirkung zu beeinträchtigen.

Verbessert wird dieser Anordnung, indem die Aufnahmeeinheit ein Basiselement aufweist, das mittels Leisten gegen die Auflage des Wagendachs gedrückt ist. Zwischen dem Basiselement und den Leisten sowie zwischen dem Basiselement und der Auflage sind die Entkopplungselemente angeordnet. Damit ergibt sich eine stabile und sichere Befestigung der Aufnahmeeinheit am Wagendach bei aufrechter Schwingungsentkopplung.

Gesteigert werden diese Vorteile durch Leisten, die einen umlaufenden Rahmen bilden. Die unterhalb dieses Rahmens angeordneten Entkopplungselemente sind umfassend gegen Witterungseinflüsse oder Beschädigungen durch unerwünschte mechanische Einwirkungen geschützt.

Bei einer vorteilhaften Ausprägung des Arbeitswagens weist die Aufnahmeeinheit eine insbesondere in Wagenlängsrichtung verlaufende Ausnehmung auf, wobei ein am Tragarm angeordnetes Gegenstück in Ruhestellung in die Ausnehmung ragt. Dabei ist das Gegenstück entlang der Ausnehmung verschiebbar, bis eine Endstellung erreicht und der Tragarm fixiert ist.

Vorteilhafterweise umfasst die Fixiervorrichtung einen Positionssensor zur Erfassung einer Stellung des Gegenstücks bezüglich der Ausnehmung. Insbesondere wird die Endstellung des Gegenstücks in der Ausnehmung erfasst, um die Fixierung des Tragarms anzuzeigen. Beispielsweise erhält eine Bedienperson eine Meldung mittels einer Anzeigevorrichtung, sobald die Endstellung erreicht ist. Bevorzugt erfolgt eine Meldung an eine Steuerungseinrichtung, mittels derer der Tragarm automatisiert in die Ruhestellung gebracht wird. Damit ist die ordnungsgemäße Beendigung des automatisierten Ablaufs sichergestellt.

Weitergebildet wird diese Ausprägung durch einen am Tragarm befestigten Arbeitskorb, der in Ruhestellung auf das Wagendach gespannt ist. Mit dieser zusätzlichen Maßnahme wird die Sicherheit erhöht. Zusätzlich zur Verriegelung des Arbeitskorbs verhindert das Festspannen ein versehentliches Loslösen des Gegenstücks aus der Ausnehmung der Aufnahmeeinheit. Spannelemente zum Festspannen des Arbeitskorbs weisen elastische Komponenten auf, damit auch hier eine Schwingungsentkopplung erhalten bleibt.

Bei einer weiteren Verbesserung der Erfindung umfasst die Fixiervorrichtung ein schwenkbares Greifelement, wobei zumindest ein Sensor zur Positionserfassung des Greifelements angeordnet ist. Durch die Positionserfassung des Greifelements ist sichergestellt, dass eine Endlage erreicht ist, in welcher der Tragarm sicher arretiert ist. Insbesondere wird einer Bedienperson die Endposition des Greifelements mittels einer Anzeigevorrichtung gemeldet. Im Falle einer automatisierten Ansteuerung des Tragarms erfolgt eine Positionsmeldung an die Steuerungseinrichtung. Bei einer entsprechenden Rückmeldung gilt der Arretierungsvorgang des Tragarms als erfolgreich abgeschlossen.

Beim erfindungsgemäßen Verfahren zum Betreiben des beschriebenen Arbeitswagens wird der Tragarm aus einer Arbeitsstellung in die Ruhestellung bewegt und mittels der Fixiervorrichtung mit dem Wagendach schwingungsentkoppelt verbunden. Vorzugsweise wird der Tragarm mittels einer Steuerungseinrichtung automatisiert in die Ruhestellung bewegt und dabei fixiert. Nach Beendigung dieses Vorgangs befindet sich der Arbeitswagen in einem für eine Überstellfahrt sicheren Zustand, wobei auftretende Schwingungen des Wagenrahmens nicht über den fixierten Tragarm auf das Wagendach übertragen werden.

Die Erfindung wird nachfolgend in beispielhafter Weise unter Bezugnahme auf die beigefügten Figuren erläutert. Es zeigen in schematischer Darstellung:
- Fig. 1: Arbeitswagen in einer Seitenansicht;
- Fig. 2: Fixiervorrichtung mit schwenkbarem Greifelement in einer Vorderansicht;
- Fig. 3: Fixiervorrichtung gemäß Fig. 2 in einer Schrägansicht;
- Fig. 4: Fixiervorrichtung gemäß Fig. 2 in einer Seitenansicht;
- Fig. 5: Schrägansicht einer anderen Ausprägung der Fixiervorrichtung, bei der ein Gegenstück in eine Ausnehmung der Aufnahmeeinheit ragt;
- Fig. 6: Fixiervorrichtung gemäß Fig. 5 in einer Vorderansicht;
- Fig. 7: Fixiervorrichtung gemäß Fig. 5 in einer Seitenansicht.

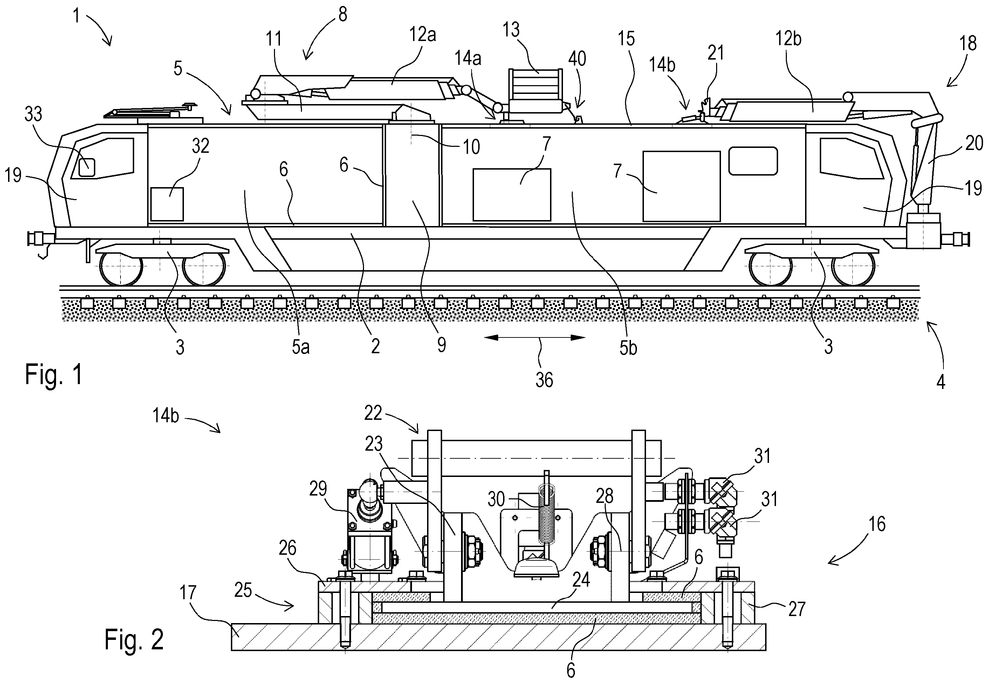

Ein in Fig. 1 dargestellter Arbeitswagen 1 umfasst einen Wagenrahmen 2, der auf Schienenfahrwerken 3 abgestützt auf einem Gleis 4 verfahrbar ist. Auf dem Wagenrahmen 2 ist ein Wagenaufbau 5 angeordnet. Der Wagenaufbau 5 besteht aus mehreren, gegenüber dem Wagenrahmen 2 schwingungsentkoppelten Aufbaueinheiten 5a, 5b. Beispielsweise sind zwischen den Aufbaueinheiten 5a, 5b und dem Wagenrahmen 2 Entkopplungselemente 6 aus elastischen und dämpfenden Materialien angeordnet. In den Anbaueinheiten 5a, 5b sind diverse Einrichtungen 7 angeordnet. Dabei handelt es sich zum Beispiel um Messgeräte oder sonstige sensitive Geräte, die vor Vibrationen zu schützen sind. Die jeweilige Aufbaueinheit 5a, 5b dient auch als Aufenthaltsraum für Bedienpersonen, wobei die schalldämmende Wirkung der Entkopplungselemente 6 die Arbeitsbedingungen verbessert. Zudem befindet sich am Wagenaufbau 5 ein Stromabnehmer, um den Arbeitswagen 1 gegebenenfalls aus einer Oberleitung zu versorgen. Dieser Stromabnehmer ist schwingungsentkoppelt am Wagenaufbau 5 angeordnet.

Zwischen den Aufbaueinheiten 5a, 5b ist eine Hebebühne 8 mittels eines Tragrahmens 9 direkt, das heißt, ohne Schwingungsentkoppelung am Wagenrahmen 2 befestigt. Im Tragrahmen 9 ist ein Durchgang für die beiden Aufbaueinheiten 5a, 5b vorgesehen. Die Hebebühne 8 umfasst einen um eine vertikale Drehachse 10 schwenkbaren Ausleger 11, an dem ein nach oben verschwenkbarer und teleskopartig ausfahrbarer erster Tragarm 12a befestigt ist. Am freien Ende dieses Tragarms 12a ist ein Arbeitskorb 13 angeordnet. In Fig. 1 ist der erste Tragarm 12a mit dem Arbeitskorb 13 in Ruhestellung dargestellt.

In dieser Ruhestellung ist der Tragarm 12a mittels einer ersten Fixiervorrichtung 14a mit einem Wagendach 15 des Wagenaufbaus 5 verbunden. Die Fixiervorrichtung 14a umfasst eine Aufnahmeeinheit 16, die mittels schwingungsdämpfender Entkopplungselemente 6 gegenüber einer Auflage 17 des Wagendachs 15 distanziert ist. Diese Entkopplungselemente 6 sind bevorzugt als Formteile aus einem mikrozellulären Polyurethanwerkstoff gefertigt.

Eine weitere Fixiervorrichtung 14b ist einem teleskopartig ausfahrbaren und verschwenkbaren Tragarm 12b eines Krans 18 zugeordnet. Dieser Kran 18 ist an einer Stirnseite des Arbeitswagen 1 vor einer Fahrerkabine 19 direkt am Wagenrahmen 2 befestigt. Der an eine Kransäule 20 anschließende Tragarm 12b ist in Ruhestellung waagrecht ausgerichtet und reicht über die Fahrerkabine 19 bis zum Wagendach 15 des schwingungsentkoppelten Wagenaufbaus 5. Am Ende des Tragarms 12b ist ein Kupplungselement 21 zur Aufnahme diverser Arbeitswerkzeuge angeordnet. Zur Fixierung des Tragarms 12b wird eine Ausnehmung des Kupplungselements 21 mit einem schwenkbaren Greifelement 22 der Fixiervorrichtung 14b kontaktiert.

Ein Ausführungsbeispiel dieser Fixiervorrichtung 14b ist in den Figuren 2-4 dargestellte. Hier umfasst die Aufnahmeeinheit 16 eine Konsole 23, die mit einem Basiselement 24 verbunden ist. Dieses plattenförmige Basiselement 24 ist mittels der Entkopplungselemente 6 in einer Halterung 25 des Wagendachs 15 eingebettet. Gebildet wird die Halterung 25 vorzugsweise aus der Wagendachauflage 17, gegen die Leisten 26 verschraubt sind. Bevorzugt sind die Leisten 26 als umlaufender Rahmen ausgebildet. Zwischen der Wagendachauflage 17 und den Leisten 26 sind Distanzelemente 27 angeordnet, deren Höhe auf die Dicke des Basiselements 24 und die Dicke der Entkopplungselemente 6 abgestimmt ist.

Dabei ist darauf zu achten, dass die Entkopplungselemente 6 bei fixierter Halterung 25 lediglich geringfügig komprimiert werden, damit die schwingungsdämpfende Funktion erhalten bleibt. Im unbelasteten Zustand ist ein Außenmaß des jeweiligen Entkopplungselementes 6 deshalb nur geringfügig größer als ein Weitenmaß eines zugeordneten Spalts zwischen dem Basiselement 24 und den Elementen 17, 26, 27 der fixierten Halterung 25. Bevorzugt liegt das jeweilige Außenmaß in einem Bereich zwischen 105% und 120% des zugeordneten Weitenmaßes, insbesondere zwischen 110% und 115%.

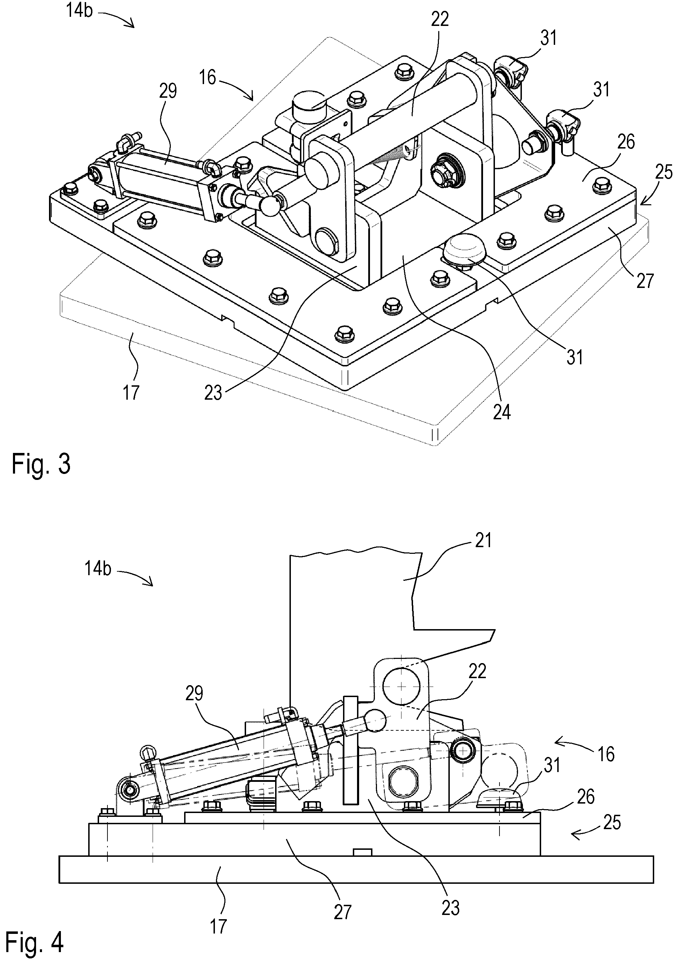

An der Konsole 23 ist das bügelförmige Greifelement 22 um eine waagrechte Drehachse 28 schwenkbar gelagert. In den Figuren 2 und 3 befindet sich das Greifelement 22 in Fixierstellung. In Fig. 4 ist das Greifelement 22 mit durchgezogenen Linien in Fixierstellung und mit strichpunktierten Linien in geöffneter Stellung dargestellt. Aus der Fixierstellung in die geöffnete Stellung wird das Greifelement 22 mittels eines Stellantriebs 29 gegen ein Federelement 30 bewegt. Bevorzugt ist der Stellantrieb 29 als Pneumatikzylinder oder als Hydraulikzylinder ausgebildet. In Fixierstellung hält das Federelement 30 das Greifelement 22 auch bei deaktiviertem Stellantrieb 29 in Position.

Seitlich der Konsole 23 sind zwei Positionssensoren 31 angeordnet. Damit wird die jeweilige Endposition des Greifelements 22 in geöffneter Stellung und in Fixierstellung erfasst. Ein weiterer Positionssensor 31 erfasst die Position des Kupplungselements 21 in fixierter Stellung. Entsprechende Meldesignale werden an eine Steuerungseinrichtung 32 und eine Anzeigevorrichtung 33 übertragen. Die Steuerungseinrichtung 32 ist zur Ansteuerung des Stellantriebs 29 und in einer Weiterbildung auch zur Ansteuerung des Krans 18 eingerichtet. Mittels der Anzeigevorrichtung 33 werden einer Bedienperson die aktuellen Stellungen des Greifelements 22 und des Kupplungselements 21 angezeigt.

In einer nicht dargestellten Variante ist das Greifelement 22 mit dem zugeordneten Stellantrieb 29 am Tragarm 12b angeordnet. Die Aufnahmeeinheit 16 umfasst dabei ein Halteelement, das beim Fixieren des Tragarms 12b mit dem Greifelement 22 erfasst wird. Auch hier ist die Aufnahmeeinheit 16 mit dem Halteelement mittels der Entkoppelungselemente 6 schwingungsentkoppelt am Wagendach 15 befestigt.

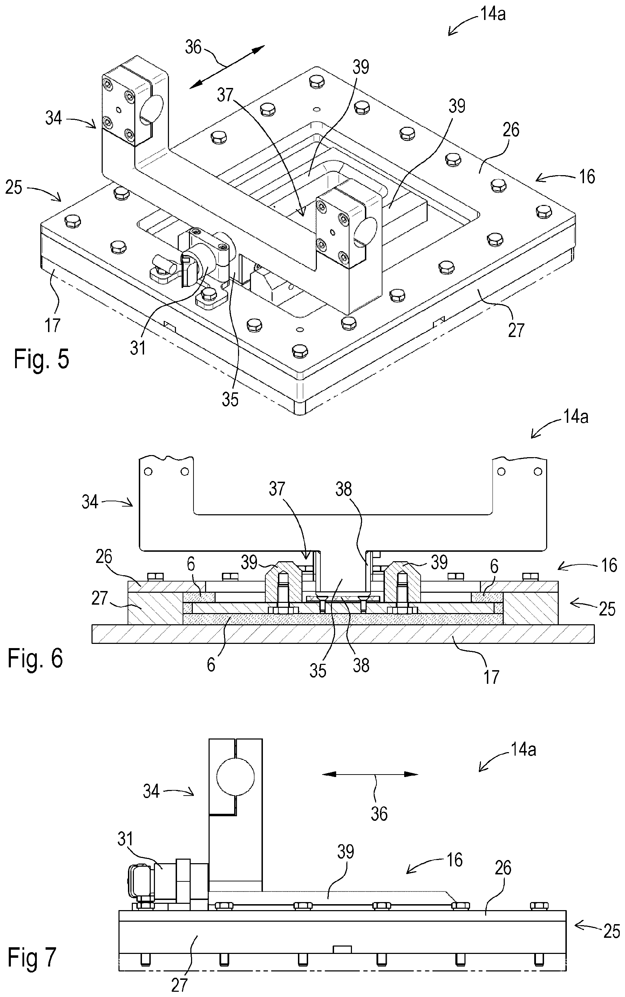

Die Figuren 5-7 zeigen die erste Fixiervorrichtung 14a zur Aufnahme des Tragarms 12a der Hebebühne 7. Ein am Tragarm 12a befestigter Bügel ist ein Gegenstück 34 der Fixiervorrichtung 14a. Dieses Gegenstück 34 befindet sich in Ruhestellung mit der Aufnahmeeinheit 16 in Kontakt. Konkret umfasst das Gegenstück 34 einen nach unten gerichteten Fortsatz 35, der in einer in Wagenlängsrichtung 36 verlaufenden Ausnehmung 37 der Aufnahmeeinheit 16 geführt ist. An Seitenflächen und einer Unterseite des Fortsatzes 35 sind austauschbare Gleitplatten 38 befestigt. Auch am Grund der Ausnehmung 37 ist ein Gleitplatte 38 angeordnet. Auf diese Weise werden Beschädigungen vermieden, wenn der Tragarm 12a in die Ruhestellung bewegt wird. Bei dieser Bewegung wird der Fortsatz 35 in die Ausnehmung 37 abgesenkt und entlang der Ausnehmung 37 in eine Endposition geführt.

Das Erreichen dieser Endposition wird mittels eines Positionssensors 31 erfasst.

Wie zuvor umfasst die Aufnahmeeinheit 16 ein plattenförmiges Basiselement 24, das mittels Entkopplungselemente 6 in der zugeordneten Halterung 25 eingebettet ist. Die Halterung 25 umfasst wiederum Leisten 26, die über Distanzelemente 27 gegen die zugeordnete Auflage 17 des Wagendachs 15 geschraubt sind. In einem Bereich zwischen den Leisten 26 sind an der Oberseite des Basiselements 24 in Wangenlängsrichtung 36 verlaufende Führungsschienen 39 zur Bildung der Ausnehmung 37 angeordnet. Bevorzugt sind die Führungsschienen 39 zu einem u-förmigen Führungselement verbunden.

Zusätzlich zur Fixierung des Tragarms 12a mittels der Fixiervorrichtung 14a erfolgt ein Festspannen des Arbeitskorbs 13 am Wagendach 15 mittels zumindest einem Spannelement 40. Dieses Spannelement 40 umfasst eine elastische Komponente, damit die Schwingungsentkopplung der Hebebühne 8 gegenüber dem Wagenaufbau 5 aufrecht erhalten bleibt.

Vorzugsweise wird der jeweilige Tragarm 12a, 12b mittels der Steuerungseinrichtung 32 automatisiert aus einer Arbeitsstellung in die Ruhestellung bewegt und mittels der zugeordneten Fixiervorrichtung 14a, 14b mit dem Wagendach 15 verbunden. Dabei sind Meldesignale der Positionssensoren 31 der Steuerungseinrichtung 32 zugeführt. Sobald die Fixierstellung des jeweiligen Tragarms 12a, 12b erreicht ist, erfolgt eine entsprechende Meldung an die Steuerungseinrichtung 32. Der automatisierte Vorgang zur Fixierung des jeweiligen Tragarms 12a, 12b ist damit abgeschlossen. Gegebenenfalls erfolgt erst dann eine Freischaltung des Arbeitswagens 1 für eine Überstellungsfahrt.

## Patentansprüche

1. Arbeitswagen (1) mit einem auf Schienenfahrwerken (3) abgestützten Wagenrahmen (2), auf dem ein Wagenaufbau (5) mit einem Wagendach (15) angeordnet ist, und mit einem verschwenkbaren Tragarm (12a, 12b), der in einer Ruhestellung mittels einer Fixiervorrichtung (14a, 14b) mit dem Wagendach (15) verbunden ist, wobei die Fixiervorrichtung (14a, 14b) eine am Wagendach (15) angeordnete Aufnahmeeinheit (16) umfasst, **dadurch gekennzeichnet, dass** sowohl zwischen dem Wagenaufbau (5) und dem Wagenrahmen (2) als auch zwischen der Aufnahmeeinheit (16) und dem Wagendach (15) schwingungsdämpfende Entkopplungselemente (6) angeordnet sind.

2. Arbeitswagen (1) nach Anspruch 1, **dadurch gekennzeichnet, dass** die Entkopplungselemente (6) Formteile aus einem mikrozellulären Polyurethanwerkstoff sind.

3. Arbeitswagen (1) nach Anspruch 1 oder 2, **dadurch gekennzeichnet, dass** die Entkopplungselemente (6) zwischen einer am Wagendach (15) angeordneten Auflage (17) sowie Befestigungselementen (26, 27) einerseits und der Aufnahmeeinheit (16) andererseits angeordnet sind.

4. Arbeitswagen (1) nach Anspruch 3, **dadurch gekennzeichnet, dass** die Aufnahmeeinheit (16) ein Basiselement (24) aufweist und dass das Basiselement (24) mittel Leisten (26) gegen die Auflage (17) des Wagendachs (15) gedrückt ist.

5. Arbeitswagen (1) nach Anspruch 4, **dadurch gekennzeichnet, dass** die Leisten (26) einen umlaufenden Rahmen bilden.

6. Arbeitswagen (1) nach einem der Ansprüche 1 bis 5, **dadurch gekennzeichnet, dass** die Aufnahmeeinheit (16) eine insbesondere in Wagenlängsrichtung (36) verlaufende Ausnehmung (37) aufweist und dass ein am Tragarm (12a) angeordnetes Gegenstück (34) in Ruhestellung in die Ausnehmung (37) ragt.

7. Arbeitswagen (1) nach Anspruch 6, **dadurch gekennzeichnet, dass** die Fixiervorrichtung (14a) einen Positionssensor (31) zur Erfassung einer Stellung des Gegenstücks (34) bezüglich der Ausnehmung (37) umfasst.

8. Arbeitswagen (1) nach Anspruch 6 oder 7, **dadurch gekennzeichnet, dass** am Tragarm (12a) ein Arbeitskorb (13) befestigt ist und dass der Arbeitskorb (13) in Ruhestellung auf das Wagendach (15) gespannt ist.

9. Arbeitswagen (1) nach einem der Ansprüche 1 bis 8, **dadurch gekennzeichnet, dass** die Fixiervorrichtung (14a, 14b) ein schwenkbares Greifelement (22) umfasst und dass zumindest ein Sensor (31) zur Positionserfassung des Greifelements (22) angeordnet ist.

## Claims

1. A work wagon (1) with a wagon frame (2) supported on rail running gears (3), on which a wagon body (5) with a wagon roof (15) is arranged, and with a swivelling supporting arm (12a, 12b) which is connected to the wagon roof (15) in a rest position by means of a fixing device (14a, 14b), with the fixing device (14a, 14b) comprising a retaining unit (16) arranged on the wagon roof (15), **characterized in that** vibration-damping decoupling elements (6) are arranged both between the wagon body (5) and the wagon frame (2) and between the retaining unit (16) and the wagon roof (15).

2. A work wagon (1) according to claim 1, **characterized in that** the decoupling elements (6) are moulded parts made of a microcellular polyurethane material.

3. A work wagon (1) according to claim 1 or 2, **characterized in that** the decoupling elements (6) are arranged between a support (17) arranged on the wagon roof (15) and fastening elements (26, 27) on the one hand and the retaining unit (16) on the other hand.

4. A work wagon (1) according to claim 3, **characterized in that** the retaining unit (16) has a base element (24) and that the base element (24) is pressed against the support (17) of the wagon roof (15) by means of strips (26).

5. A work wagon (1) according to claim 4, **characterized in that** the strips (26) form a surrounding frame.

6. A work wagon (1) according to one of the claims 1 to 5, **characterized in that** the retaining unit (16) has a recess (37) running, in particular, in the longitudinal direction of the wagon (36), with a mating piece (34) arranged on the supporting arm (12a) projecting into the recess (37) in the rest position.

7. A work wagon (1) according to claim 6, **characterized in that** the fixing device (14a) comprises a position sensor (31) for recording a position of the mating piece (34) with respect to the recess (37).

8. A work wagon (1) according to claim 6 or 7, **characterized in that** a workman basket (13) is fastened to the supporting arm (12a) and that the workman basket (13) is clamped to the wagon roof (15) in the rest position.

9. A work wagon (1) according to one of the claims 1 to 8, **characterized in that** the fixing device (14a, 14b) comprises a slewing gripping element (22) and that at least one sensor (31) is arranged for recording the position of the gripping element (22).

## Revendications

1. Wagon de travail (1) avec un châssis de wagon (2) appuyé sur des mécanismes de roulement ferroviaires (3), sur lequel une structure de wagon (5) avec un toit de wagon (15) est disposée, et avec un bras porteur pivotant (12a, 12b) qui est connecté au toit de wagon (15) dans une position de repos au moyen d'un dispositif de fixation (14a, 14b), dans lequel le dispositif de fixation (14a, 14b) comprend un module de réception (16) disposé sur le toit de wagon (15), **caractérisé en ce que** des éléments de désaccouplement (6) à amortissement de vibrations sont disposés aussi bien entre la structure de wagon (5) et le châssis de wagon (2) qu'entre le module de réception (16) et le toit de wagon (15).

2. Wagon de travail (1) selon la revendication 1, **caractérisé en ce que** les éléments de désaccouplement (6) sont des pièces moulées constituées d'un matériau de polyuréthane microcellulaire.

3. Wagon de travail (1) selon la revendication 1 ou 2, **caractérisé en ce que** les éléments de désaccouplement (6) sont disposés entre un support (17) disposé sur le toit de wagon (15) ainsi que des éléments de fixation (26, 27) d'un côté et le module de réception (16) de l'autre côté.

4. Wagon de travail (1) selon la revendication 3, **caractérisé en ce que** le module de réception (16) présente un élément de base (24) et que l'élément de base (24) est poussé contre le support (17) du toit de wagon (15) au moyen de barres (26).

5. Wagon de travail (1) selon la revendication 4, **caractérisé en ce que** les barres (26) forment un cadre périphérique.

6. Wagon de travail (1) selon une des revendications 1 à 5, **caractérisé en ce que** le module de réception (16) présente un évidement (37) s'étendant notamment dans la direction longitudinale de wagon et qu'une pièce conjuguée (34) disposée sur le bras porteur (12a) fait saillie dans l'évidement (37) en position de repos.

7. Wagon de travail (1) selon la revendication 6, **caractérisé en ce que** le dispositif de fixation (14a) comprend un capteur de position (31) pour la détection d'une position de la pièce conjuguée (34) par rapport à l'évidement (37).

8. Wagon de travail (1) selon la revendication 6 ou 7, **caractérisé en ce qu'**une nacelle de travail (13) est fixée sur le bras porteur (12a) et que la nacelle de travail (13) est étirée sur le toit de wagon (15) en position de repos.

9. Wagon de travail (1) selon une des revendications 1 à 8, **caractérisé en ce que** le dispositif de fixation (14a, 14b) comprend un élément de préhension pivotant (22) et qu'au moins un capteur (31) est disposé pour la détection de position de l'élément de préhension (22).
